# EUROPÄISCHE PATENTSCHRIFT

(11) **EP 4 255 861 B1**
(45) Veröffentlichungstag und Bekanntmachung des Hinweises auf die Patenterteilung: **06.08.2025**
(21) Anmeldenummer: 21807003.5
(22) Anmeldetag: 03.11.2021
(51) Int. Cl.: C03C 23/00

(54) **VERFAHREN ZUM LÖSCHEN EINER LASERINDUZIERTEN MARKIERUNG VON GLASTAFELN SOWIE VERFAHREN UND VORRICHTUNGEN ZUM MARKIEREN UND ENTMARKIEREN VON GLASTAFELN, VORZUGSWEISE VON BASISGLASTAFELN, BEVORZUGT VON FLOATGLASTAFELN**
METHOD FOR ERASING A LASER-INDUCED MARKING OF GLASS PLATES AND METHOD AND APPARATUSES FOR MARKING AND DE-MARKING GLASS PLATES, PREFERABLY BASIC GLASS PLATES, MORE PREFERABLY FLOAT GLASS PLATES
PROCÉDÉ D'EFFACEMENT D'UN MARQUAGE LASER DE PLAQUES DE VERRE ET PROCÉDÉ ET APPAREIL DE MARQUAGE ET DE DÉMARQUAGE DE PLAQUES DE VERRE, DE PRÉFÉRENCE DE PLAQUES DE VERRE DE BASE, DE PRÉFÉRENCE ENCORE DE PLAQUES DE VERRE FLOTTÉ

(30) Priorität: 02.12.2020 DE 102020215234
(43) Veröffentlichungstag der Anmeldung: 11.10.2023
(73) Patentinhaber: HEGLA boraident GmbH & Co. KG, 37688 Beverungen (DE)
(72) Erfinder: RAINER, Thomas, 38855 Wernigerode (DE)
(74) Vertreter: Dr. Solf & Zapf Patent- und Rechtsanwalts PartG mbB
(86) Internationale Anmeldenummer: PCT/EP2021/080482
(87) Internationale Veröffentlichungsnummer: WO 2022/117271

(56) Entgegenhaltungen:
- EP-A1- 0 761 377
- WO-A1-02/083589
- WO-A1-2004/113242
- DE-A1- 102005 057 916
- US-A1- 2005 044 895
- SCAFFIDI J1 ET AL: "Dual-pulse laser-induced breakdown spectroscopy with combinations of femtosecond and nanosecond laser pulses", vol. 42, no. 30, 1 October 2003 (2003-10-01), pages 6099 - 6106, XP009519395, ISSN: 1559-128X, Retrieved from the Internet <URL:https://doi.org/10.1364/AO.42.006099?nosfx=y> DOI: 10.1364/AO.42.006099

## Beschreibung

Die vorliegende Erfindung betrifft Verfahren und Vorrichtungen zum Markieren und Entmarkieren von Glastafeln, vorzugsweise von Basisglastafeln, bevorzugt von Floatglastafeln. Die Erfindung betrifft zudem Verfahren zum Löschen einer laserinduzierten Markierung von Glastafeln, vorzugsweise von Basisglastafeln, bevorzugt von Floatglastafeln, und erfindungsgemäße Verwendungen hierfür.

Basisglastafeln stellen das Ausgangsmaterial bzw. Rohmaterial zur Herstellung von Funktionsgläsern bzw. Flachglasprodukten, z.B. von Einscheibensicherheitsglastafeln oder Verbundsicherheitsglastafeln oder von Isolierverglasungen, dar. Zudem handelt es sich bei Basisglastafeln um Flachglas. Als Flachglas wird jedes Glas in Form von Glastafeln bezeichnet, unabhängig vom angewandten Herstellungsverfahren, Dimension und Form und Veredelung. Bei Basisglastafeln handelt es sich somit um Glasrohtafeln.

Die Basisglastafeln bestehen zudem in der Regel aus silikatischem Glas.

Bei Floatglastafeln handelt es sich um Flachglas, welches im Floatprozess bzw. Floatglasverfahren hergestellt wird. Beim Floatglasverfahren handelt es sich um ein endlos-kontinuierliches Herstellungsverfahren, bei dem eine flüssige Glasschmelze fortlaufend von einer Seite auf ein Bad aus flüssigem Zinn geleitet wird. Auf dem geschmolzenen Zinn "floatet" die Glasmasse in Form eines endlosen, verzerrungsfreien Floatglasbands. Am Ende der Float-Wanne gelangt das Floatglasband in einen Kühlkanal und wird dort langsam bis auf Raumtemperatur abgekühlt. Das Glasband wird zu Glasrohtafeln, z.B. der Größe 600 x 321 cm, geschnitten und dann zum Glasverarbeiter transportiert, welche daraus z.B. Isolierglastafeln, Einscheibensicherheitsglastafeln oder Verbundsicherheitsglastafeln herstellen.

Das Floatglasverfahren wird seit den 1960er Jahren industriell angewandt und hat seitdem die meisten anderen Methoden zur Flachglasherstellung bzw. Herstellung von Glasrohtafeln weitgehend verdrängt.

Weitere Arten von Basisglas sind z.B. Ornamentglas oder Fourcaultglas.

Ornamentglas (auch Gussglas oder Stukturglas genannt) wird dadurch erzeugt, dass durch zwei Walzen ein Muster in die noch glühende Glasmasse eingraviert wird. Durch die Strukturwalzen entstehen Gläser mit ein- oder beidseitig, mehr oder weniger stark ornamentierter Oberfläche.

Das Fourcaultglasverfahren ist ein Verfahren zur Herstellung von durchsichtigen Fenstergläsern im Ziehverfahren, bei dem die Glasschmelze über eine darin eingelassene, rechteckige Ziehdüse quillt und unmittelbar danach von Fangeisen seitlich gefasst und vertikal in die Höhe gezogen wird. Walzenpaare befördern die erstarrende Glasmasse durch einen vertikalen Kühlschacht.

Auf dem Fachgebiet ist es bekannt, die hergestellten Basisglastafeln, insbesondere die Floatglastafeln, mit einer Markierung zu versehen, welche spezifische Informationen bezüglich der Basisglastafel enthält. Z.B. enthält die Markierung Informationen über die Qualität der Basisglastafel, z.B. ob die Basisglastafel Glasfehler aufweist und wenn ja, an welcher Stelle. Bei Glasfehlern kann es sich z.B. um Blasen und/oder Partikeleinschlüsse, z.B. metallische Einschlüsse, oder Schlieren oder Risse handeln. Diese Informationen werden in einer Datenbank hinterlegt und vom Glasverarbeiter ausgelesen und ermöglichen es diesem, die Basisglastafel entsprechend zu verwerten, z.B. Schnitte so zu legen, dass die Glasfehler heraus geschnitten werden.

Denn für ihre spätere Verwendung müssen die hergestellten Basisglastafeln, insbesondere die Floatglastafeln, in der Regel zugeschnitten werden. Dazu werden insbesondere Glasrohtafeln in einzelne Glastafelzuschnitte zerteilt. Dies erfolgt in an sich bekannten Schneidanlagen entweder noch bei dem Basisglashersteller oder bei einem nachgeschalteten Glasverarbeiter. Nach dem Schneiden werden die Glastafelzuschnitte bzw. die geschnittenen Glastafeln 25 vorzugsweise in einer Weiterbearbeitungsanlage, beispielsweise einer Isolierglaslinie, einer Bearbeitungsanlage, z.B. einer Anlage zur Kantenbearbeitung, oder einer Tempervorrichtung, weiter bearbeitet.

Noch beim Basisglashersteller oder auch bei einem nachgeschalteten Glasverarbeiter können zudem die hergestellten Einscheiben-Basisglastafeln zu Verbund-Basisglastafeln verarbeitet werden, indem zwei oder mehr Einscheiben-Basisglastafeln miteinander verbunden werden. Falls gewünscht, werden die Einscheiben-Basisglastafeln dabei zuvor mit einer Funktionsschicht versehen.

Die Markierungen liegen beispielsweise als Zeichenfolge oder in Form von, insbesondere maschinenlesbaren, Codes, z.B. Data-Matrix-Codes (DCM), vor.

Nicht nur bei der Produktion, sondern auch bei der Verarbeitung der Glastafeln besteht dabei Bedarf zur Kennzeichnung. Die Kennzeichnung erleichtert einerseits die Organisation des Produktionsablaufes und ermöglicht andererseits die Produktverfolgung. Dabei findet ständig ein Inhaltswechsel der Kennzeichnung statt. Zudem soll die Markierung des Basisglases nicht auf dem Endprodukt erscheinen. Daraus resultiert der Wunsch nach löschbaren Markierungen.

Auf dem Fachgebiet erfolgt die Markierung z.B. zur Zeit nach dem Prinzip des Tintenstrahldruckes (auftragendes Markierungsverfahren), wobei die erste Markierung am kalten Ende des hergestellten Floatglasbandes vor dem Zuschnitt in Floatglastafeln erfolgt. Vor jedem weiteren Verarbeitungsschritt bei der Verarbeitung wird die Markierung wieder entfernt und danach erneut aufgebracht. Dies geschieht auch, um einen qualitätsbeeinträchtigenden Einfluss durch die Tinte der Markierung während der folgenden Verarbeitungsschritte zu vermeiden. Beispielsweise ist die Tinte störend beim Aufbringen von Funktionsschichten und der Herstellung von Verbund-Basisglastafeln.

Die EP 1 735 517 B1 offenbart eine Verglasung, die mindestens eine von der Außenseite sichtbare, von jedermann identifizierbare, dauerhafte Markierung umfasst, die aus einer Zeichenfolge besteht. Die Markierung stellt Informationen dar, die technische Charakteristiken der Verglasung, deren Herstellung oder kommerzielle Informationen betreffen. Die Zeichenfolge umfasst eine Zahlenfolge, wobei jede Zahl durch binäre oder hexadezimale Codierung gemäß einem oder mehreren aufeinanderfolgenden Zeichen des Kennzeichnungselements codiert ist. Die Markierung kann durch Eingravieren oder Aufdrucken erfolgen.

Des Weiteren sind aus den beiden Druckschriften DE 10 2005 026 038 A1 und DE 10 2005 025 982 A1 Lasermarkierungsverfahren zur Markierung von Glastafeln bekannt:
Gemäß der DE 10 2005 026 038 A1 wird mittels Laser eine glasartige Schicht mit Metall-Nanopartikeln auf die Oberfläche der Glastafel aufgebracht. Dazu wird ein Spender- bzw. Trägermedium in Kontakt mit der zu beschriftenden Glastafeloberfläche gebracht und durch laserstrahlinduzierte Prozesse eine Markierung auf der Glastafeloberfläche erzeugt. Das Trägermedium weist z.B. eine PET-Folie auf, die z.B. eine Low-E-Funktionsbeschichtung aufweist, wobei diese mindestens eine metallische Funktionsschicht aufweist. Zur Markierung wird ein Laserstrahl auf die Funktionsbeschichtung gerichtet und aufgrund der Laserstrahleinstrahlung Material aus der Funktionsbeschichtung von der PET-Trägerfolie auf die zu markierende Glastafeloberfläche übertragen. Das Material haftet auf der Glastafeloberfläche als glasartige Matrix mit metallischen Nanopartikeln, wobei die Matrix aus den ursprünglich in den Funktionsschichten der Funktionsbeschichtung vorliegenden Substanzen gebildet ist. Die PET-Trägerfolie bleibt unversehrt.

Gemäß der DE 10 2005 025 982 A1 wird in ähnlicher Weise durch Laserstrahlung die Low-E-Funktionsbeschichtung einer Glastafel durch Laserstrahleinstrahlung so farblich verändert, dass eine Markierung erzeugt wird.

Zudem ist es auf dem Fachgebiet bekannt, die Glastafeln mit einer Innenmarkierung zu versehen, welche sich im Inneren der Glastafeln befindet. Die Innenmarkierung kann z.B. laserinduziert erfolgen (Forschungsvereinigung Feinmechanik, Optik und Medizintechnik e.V., "Untersuchung zur Materialreaktion im Innern optisch transparenter Materialien nach Ultrakurz-Laserpulsanregung: Generierung spannungsarmer Innenmarkierungen (micro-dots)).

Beispielsweise ist es bekannt, laserinduziert Mikrorisse im Glas zu erzeugen. Die erzeugten Strukturen streuen das Licht und sind so als Markierungen erkennbar und mit Code-Lesern auslesbar. Die Mikrorisse verändern allerdings die mechanischen Eigenschaften der Glastafeln.

Zudem ist eine laserinduzierte Erzeugung von Farbzentren (Volumenfärbung) im Glas zur Innenmarkierung bekannt. Die Innenmarkierung von Glastafeln aufgrund der Bildung von Farbzentren beruht darauf, dass durch die Laserstrahlung Defekte im SiO₂-Netzwerk erzeugt werden. Die Defekte führen zu einer Veränderung der optischen Eigenschaften, insbesondere zu einer Abnahme der optischen Transmission. Ein Farbzentrum ist somit ein Defekt im SiO₂-Netzwerk, der sichtbares Licht absorbiert. In einem Farbzentrum kann elektromagnetische Strahlung im Wellenlängenbereich des sichtbaren Lichts absorbiert werden, was zu einer gelblich braunen Verfärbung des Glases führt. Zur Erzeugung von Farbzentren (Volumenfärbung) werden Laser mit einer Pulsdauer im Pikosekunden- und Femtosekundenbereich mit Wellenlängen von 355 bis 1064 nm verwendet. Die Innenmarkierung mittels Farbzentren ist thermisch reversibel.

Außerdem kann die Innenmarkierung durch die Erzeugung von micro-dots erfolgen, welche auf der lokalen Änderung des komplexen Brechungsindex (=optische Dichte) basiert. Die Dichteänderung wird durch lokales Aufschmelzen des Materials erzeugt, also einen thermischen Prozess. Auch für die Erzeugung von micro-dots werden Laser mit einer Pulsdauer im Pikosekunden- und Femtosekundenbereich mit Wellenlängen von 355 bis 1064 nm verwendet. Die Innenmarkierung mittels micro-dots ist thermisch stabil. Sie verändert jedoch auch die mechanische Festigkeit des Glases, da um die lokale Dichteänderung Spannungen erzeugt werden.

Aus der DE 101 62 111 A1 geht z.B. ein Verfahren zur Innenmarkierung von z.B. Glas hervor, bei dem auf eine Oberfläche des Glases ein Laserstrahl gerichtet wird, für den das Glas durchlässig ist. Es wird z.B. ein Laser mit einer Pulsdauer von 200 fs und einer Wellenlänge von 800 nm verwendet. Der Laserstrahl wird an einem Ort fokussiert, der von der Oberfläche einen Abstand aufweist und innerhalb des Glases angeordnet ist, so dass dort eine hohe Leistungsdichte vorhanden ist. Die so erzielte hohe Leistungsdichte des Laserstrahls induziert nicht-lineare optische Effekte der Anregung, so dass eine sehr lokale Energieeinwirkung im transparenten Material erfolgt. Abhängig vom Bauteil und der Leistungsdichte des Laserstrahls können so Veränderungen in der komplexen Brechzahl erzielt werden, die eine Schaffung einer Markierung innerhalb des transparenten Materials in Form eines Gebietes von veränderten optischen Eigenschaften bewirkt. Diese veränderten optischen Eigenschaften der durch das erfindungsgemäße Verfahren erzeugten Markierung sollen auf Änderungen im komplexen Brechungsindex beschränkt bleiben. Mikrorisse im Bauteil sollen bei geeigneter Einstellung in diesem Verfahren nicht entstehen. Die Innenmarkierung bleibt in einem Temperaturbereich bis mehrere 100 K oberhalb der Zimmertemperatur dauerhaft erhalten.

Aus der US 2005/044895 A1 ist das Markieren von gefärbtem Glas durch die Bildung von Entfärbungen mittels Laserbehandlung bekannt, wobei es sich bei dem gefärbten Glas um ein komplett durchgefärbtes Glasmaterial handelt, und das Markieren durch Entfernen der Farbe entsprechend der Form der zu erzeugenden Markierung erfolgt.

Die DE 10 2005 057 916 A1 offenbart ein Verfahren zur reversiblen Markierung von Einscheibensicherheitsglas, wobei zunächst eine gewünschte metallpartikelhaltige und/oder metallionenhaltige Markierung mittels Laserbestrahlung erzeugt wird und diese in einer anschließenden Temperaturbehandlung wieder entfernt werden kann.

Die WO 2004/113242 A1 offenbart ein Verfahren zum Kennzeichnen von Glasplatten mittels Laser, wobei dauerhaft sichtbare Punkte unterhalb der Glasoberfläche entstehen.

Aus der EP 0 761 377 A1 ist das Markieren von Glasplatten mittels Laserbehandlung bekannt, wobei eine Transferschicht verwendet wird, die das Laserlicht absorbiert und so eine Markierung ermöglicht.

Die WO 02/083589 A1 offenbart ein Verfahren zur Herstellung von farbigen Strukturen in einer Glasoberfläche durch Bildung von metallhaltigen Nanopartikeln, die das Glas färben und somit markieren.

Die Veröffentlichung SCAFFIDI JON ET AL betrifft eine Vorrichtung für die laserinduzierte Plasmaspektroskopie (Spektrometer). Mittels laserinduzierter Plasmaspektroskopie ist eine elementspezifische Zusammensetzung einer Probe bestimmbar. Dazu wird die Probe mit kurzen Laserimpulsen beschossen, ein kleines Volumen der Probe verdampft und zu einem Plasma ionisiert (Laserablation). Beim Verfall des Plasmas wird Licht emittiert, das charakteristisch für die enthaltenen Elemente ist. Das Spektrum der Strahlung wird mit einem Spektrometer aufgenommen.

Aufgabe der vorliegenden Erfindung ist die Bereitstellung von Verfahren zum Löschen einer laserinduzierten Markierung von Glastafeln, vorzugsweise von Glastafeln, vorzugsweise von Basisglastafeln, bevorzugt von Floatglastafeln, welche wirtschaftlich sind und zu keiner mechanischen Beeinträchtigung der Glastafeln führen.

Weitere Aufgabe der vorliegenden Erfindung ist die Bereitstellung von Verfahren zum Markieren und Entmarkieren von Glastafeln, vorzugsweise von Glastafeln, vorzugsweise von Basisglastafeln, bevorzugt von Floatglastafeln, welche wirtschaftlich sind und zu keiner mechanischen Beeinträchtigung der Glastafeln führen und eine maschinenlesbare Kennzeichnung erlauben.

Weitere Aufgabe ist die Bereitstellung von Vorrichtungen zur Durchführung des jeweiligen Verfahrens.

Außerdem sollen Verwendungen der Vorrichtungen angegeben werden.

Diese Aufgaben werden durch Verfahren mit den Merkmalen von Anspruch 1, 4, 7 und 8 und Vorrichtungen mit den Merkmalen von Anspruch 13 und 15 gelöst. In den Ansprüchen 18 und 19 ist jeweils eine erfindungsgemäße Verwendung angegeben. Vorteilhafte Weiterbildungen der Erfindung sind in den sich anschließenden Unteransprüchen gekennzeichnet.

Im Rahmen der Erfindung wurde überraschenderweise herausgefunden, dass es möglich ist, zunächst eine laserinduzierte Innenmarkierung mittels Volumenfärbung in den Glastafeln zu erzeugen und anschließend die erzeugte Innenmarkierung ebenfalls mittels Laserstrahlung wieder zu löschen bzw. zu entfernen.

Laserinduziert meint erzeugt mittels Laserstrahlung.

Alternativ dazu kann die Markierung auch durch laserinduzierte, oberflächliche Feinstgravur erfolgen. Im Rahmen der Erfindung wurde nun herausgefunden, dass diese Markierung mittels Laserpolitur ebenfalls wieder entfernt bzw. gelöscht werden kann.

Löschen umfasst dabei im Rahmen der Erfindung nicht nur ein vollständiges Entfernen der Markierung, auch wenn das bevorzugt ist, sondern auch eine derartig starke Schwächung, dass die Information der Markierung nicht mehr auslesbar ist.

Im Folgenden wird die Erfindung anhand einer Zeichnung beispielhaft näher erläutert. Es zeigen:
- Figur 1:: Stark vereinfacht und schematisch einen Schnitt durch eine zu markierende Glastafel mit einer Markierungseinrichtung gemäß einer ersten Ausführungsform der Erfindung
- Figur 2:: Stark vereinfacht und schematisch einen Schnitt durch eine markierte Glastafel mit einer Entmarkierungseinrichtung gemäß einer ersten Ausführungsform der Erfindung

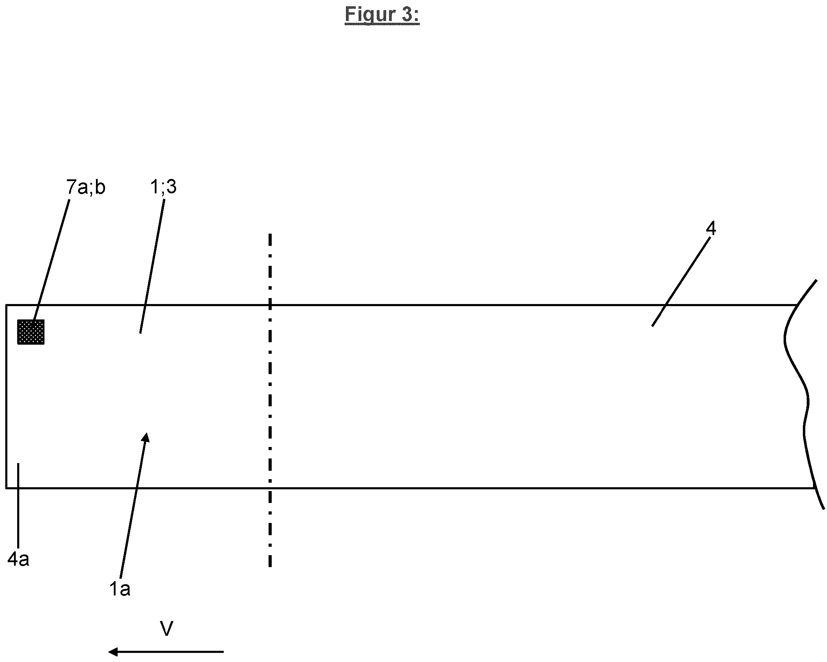

- Figur 3:: Stark vereinfacht und schematisch eine Draufsicht auf ein endloses Floatglasband
- Figur 4:: Absorptionsspektren des Ausgangsglases, des markierten Glases und des entmarkierten Glases
- Figur 5:: Stark vereinfacht und schematisch einen Schnitt durch eine zu markierende Glastafel mit einer Markierungseinrichtung gemäß einer weiteren Ausführungsform der Erfindung
- Figur 6:: Stark vereinfacht und schematisch einen Schnitt durch eine markierte Glastafel mit einer Entmarkierungseinrichtung gemäß der weiteren Ausführungsform der Erfindung

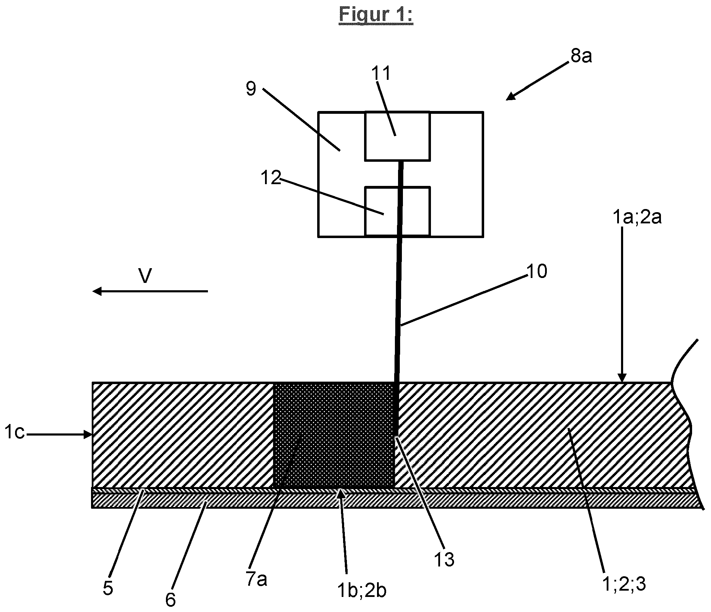

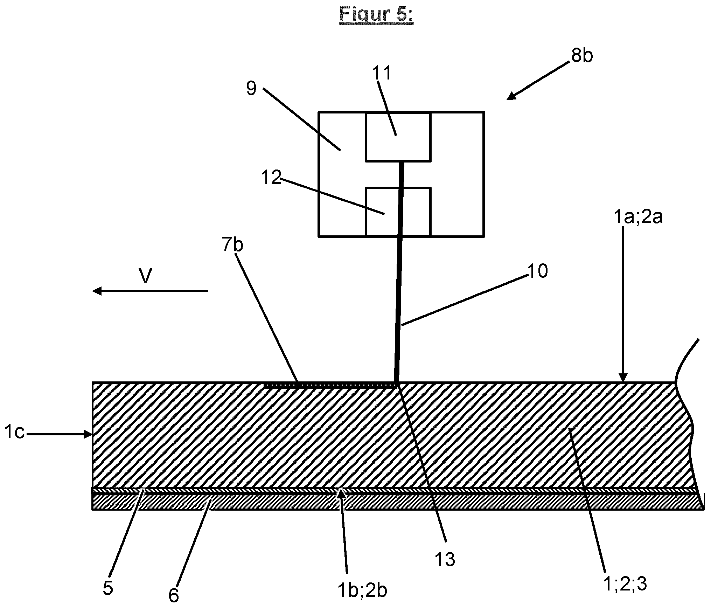

Eine erfindungsgemäß zu markierende Glastafel 1 (Fig. 1, 5) weist eine erste und zweite Glasoberfläche 1a;b sowie vorzugsweise eine umlaufende Glastafelkante 1c auf. Die Glastafel 1 weist vorzugsweise jeweils nur eine einzelne bzw. einzige Glasscheibe 2 (Fig. 1) auf. Jede Glasscheibe 2 weist zwei Glasscheibenoberflächen 2a;b auf. Weist die Glastafel 1 nur eine einzige Glasscheibe 2 auf, bilden die beiden Glasscheibenoberflächen 2a;b die Glasoberflächen 1a;b der Glastafel 1.

Besonders bevorzugt handelt es sich bei der zu markierenden Glastafel 1 um eine Basisglastafel bzw. Glasrohtafel, bevorzugt um eine Floatglastafel 3.

Wie bereits erläutert, erfolgt die Herstellung von Floatglastafeln 3 durch die Herstellung eines endlosen Floatglasbands 4, welches nach dem Abkühlen zu den Floatglastafeln 3 geschnitten wird. Bzw. die Floatglastafeln 3 werden von dem abgekühlten Floatglasband 4 abgetrennt, insbesondere abgeschnitten. Das Floatglasband 4 weist dabei immer ein freies, kaltes Ende 4a auf.

Vorzugsweise erfolgt nun die Markierung der Floatglastafeln 3 bereits während der Herstellung, indem die Markierung am kalten Ende 4a des hergestellten Floatglasbands 4 in das Floatglasband 4 vor dem Zuschnitt in Floatglastafeln 3 eingebracht wird.

In analoger Weise kann die Markierung bei anderen Herstellungsverfahren in das jeweilige Basisglasband eingebracht werden.

Die Markierung der Basisglastafel, insbesondere der Floatglastafel 3, kann aber auch nach der Abtrennung von dem Glasband erfolgen.

Es kann sich bei der zu markierenden Glastafel 1 zudem auch um eine bereits weiter verarbeitete Glastafel 1, z. B. um eine Einscheibensicherheitsglastafel oder eine Mehrscheiben-Isolierglastafel oder eine zugeschnittene Verbundglastafel, insbesondere eine Verbundsicherheitsglastafel (VSG-Tafel) handeln.

Eine Verbundglastafel besteht bekanntermaßen aus mehreren miteinander verbundenen Glasscheiben 2 (nicht dargestellt). Bei Verbundglastafeln handelt es sich um ein Laminat aus mindestens zwei einzelnen Glasscheiben 2, die jeweils mittels einer klebfähigen Zwischenschicht aus Kunststoff, insbesondere durch eine hochreißfeste, zähelastische, thermoplastische Folie, miteinander verbunden sind. In diesem Fall bilden jeweils die beiden außenliegenden Glasscheibenoberflächen 2a;b die Glasoberflächen 1a;b der Glastafel 1. Bei den Glasscheiben 2 der Verbundglastafel handelt es sich vorzugsweise zumindest teilweise um vorgespannte Glasscheiben 2. Die Markierung wird in diesem Fall ins Innere einer der Glasscheiben 2 eingebracht.

Eine Mehrscheiben-Isolierglastafel besteht bekanntermaßen aus mindestens zwei Glasscheiben 2, zwischen denen sich ein Hohlraum befindet, der gas- und feuchtigkeitsdicht verschlossen ist.

Zudem kann die Glastafel 1 oder Glasscheibe 2 an einer ihrer beiden Glasoberflächen 1a;b;2a;b eine oberflächliche Funktionsbeschichtung 5 aufweisen.

Die Funktionsbeschichtung 5 kann eine oder mehrere einzelne Funktionsschichten aufweisen. Bei mehreren Funktionsschichten handelt es sich somit um ein Funktionsschichtenlaminat. Die Funktionsschichten ändern bestimmte Eigenschaften der Glastafel 1 bzw. verleihen dieser bestimmte Funktionen. Die Funktionen können dabei z.B. Wärmeschutz, Sonnenschutz, oder Beheizung sein. Bevorzugt handelt es sich bei der Funktionsbeschichtung 5 um eine Wellenlängenselektive bzw. Low-E-Beschichtung. Die Funktionsbeschichtung 5 wird vor dem bestimmungsgemäßen Gebrauch der Glastafel 1 nicht entfernt, sondern ist auch beim bestimmungsgemäßen Gebrauch der Glastafel 1 noch vorhanden. Die Funktionsbeschichtung 5 der Glastafel 1 weist in der Regel zumindest eine metallhaltige Funktionsschicht auf. Vorzugsweise handelt es sich jeweils um eine Metall- oder eine, bevorzugt keramische, Metalloxidschicht. Die Funktionsbeschichtung 5 der Glastafel 1 weist somit zumindest eine metallische und/oder zumindest eine, bevorzugt metallhaltige, keramische Funktionsschicht auf. Des Weiteren weist die Funktionsbeschichtung 5 vorzugsweise eine Dicke von < 2 µm, bevorzugt < 1 µm auf.

Des Weiteren kann die Glastafel 1 an einer ihrer beiden Glasoberflächen 1a;b auch eine an sich bekannte Schutzbeschichtung 6 in Form einer abziehbaren Schutzfolie oder einer Polymerschutzschicht aufweisen. Dies ist insbesondere der Fall, wenn die Glastafel 1 eine noch auszuhärtende Funktionsbeschichtung 5 aufweist, die geschützt werden muss. Die Schutzbeschichtung 6 schützt die darunter angeordnete Funktionsbeschichtung 5.

Wie bereits erläutert, wird nun gemäß einer ersten Ausführungsform der Erfindung zunächst eine laserinduzierte Innenmarkierung 7a in den Glastafeln 1 erzeugt und diese anschließend ebenfalls mittels Laserstrahlung wieder entfernt. Die Innenmarkierung 7a wird dabei durch Bildung von Farbzentren (=Volumenfärbung) mittels ultrakurz gepulster Laserstrahlung erzeugt. Und die Entfernung bzw. das Löschen der Innenmarkierung 7a erfolgt mittels Laserstrahlung, die in einem Wellenlängenbereich liegt, welcher von den Farbzentren absorbiert wird.

Fig. 1 zeigt beispielhaft eine Markierungseinrichtung 8a zur Erzeugung der Innenmarkierung 7a.

Die Markierungseinrichtung 8a weist eine Laserstrahlerzeugungseinrichtung bzw. einen Laserkopf 9 zur Erzeugung bzw. Bereitstellung eines Laserstrahls 10 auf. Der Laserkopf 9 kann ortsfest sein oder verfahrbar sein, wozu entsprechende Antriebsmittel vorhanden sind.

Der Laserkopf 9 weist eine Laserstrahlungsquelle 11 und eine dazugehörige Laseroptik 12 auf. Mittels der Laseroptik 12 wird der Laserstrahl 10 unter anderem fokussiert. Zudem kann der Laserstrahl 10 mittels der Laseroptik 12 von einer Ausgangsposition, in der er vertikal bzw. senkrecht zur Glasoberfläche 1a;b ausgerichtet ist, verschwenkt bzw. ausgelenkt werden, so dass er ein Scanfeld abfahren kann, worauf weiter unten näher eingegangen wird.

Die Laserstrahlungsquelle 11 erzeugt dabei einen ultrakurzgepulsten Laserstrahl 10, mit einer Pulsdauer im Pikosekunden- oder Femtosekundenbereich. Vorzugsweise weist der Laserstrahl 10 eine Pulsdauer von 10⁻¹¹ to 10⁻¹³ s auf.

Außerdem erzeugt die Laserstrahlungsquelle 11 vorzugsweise einen Laserstrahl 10, dessen Repetitionsrate bei 10 bis einige MHz liegt. Je höher dabei die Repetitionsrate ist, umso schneller kann die Markierung erfolgen. Dies ist insbesondere bei der Markierung von bewegten Glastafeln 1 von Bedeutung.

Des Weiteren liegt die Pulsenergie vorzugsweise bei einigen Mikro-Jule bis ~1 mJ.

Die Laserstrahlungsquelle 11 erzeugt zudem vorzugsweise einen Laserstrahl 10, dessen Wellenlänge bei 300 nm bis 2 µm, bevorzugt bei 533 nm bis 1200 nm, besonders bevorzugt bei 533 nm bis 1 µm, liegt.

Vorzugsweise handelt es sich bei der Laserstrahlungsquelle 11 somit um einen VIS-Laser oder einen IR-Laser.

Vorzugsweise handelt es sich zudem um einen Festkörperlaser, bevorzugt um einen Faserlaser.

Zudem erzeugt die Laserstrahlungsquelle 11 vorzugsweise einen Laserstrahl 10, dessen Laserleistung bei 1 bis einige 100 W, bevorzugt bei 20 bis 100 W, liegt.

Bekanntermaßen kommt es bei der Erzeugung von Farbzentren durch Volumenfärbung darauf an, dass die Energiedichte (Laserleistung/Fläche) entsprechend eingestellt ist. Wird eine bestimmte Energieschwelle überschritten, kommt es zum Materialabtrag bzw. zum Aufschmelzen des Materials. Wie hoch dabei die Energieschwelle ist, ist unter anderem materialabhängig.

Ziel bei dem erfindungsgemäßen Verfahren ist es, in möglichst kurzer Zeit eine möglichst kontrastreiche und möglichst dunkle Innenmarkierung 7a zu erzeugen.

Die Bewegung des Laserstrahls 10 erfolgt bei der Innenmarkierung, wie bereits erläutert, vorzugsweise mittels der Laseroptik 12. Dazu weist die Laseroptik 12 in an sich bekannter Weise eine Scanoptik zum Bewegen des Laserstrahls 10 in einem Scanfeld auf. Vorzugsweise handelt es sich bei der Scanoptik um zumindest zwei verstellbare Spiegel. Das Scanfeld beträgt z.B. 100 mm x 100 mm.

Dabei soll die Innenmarkierung möglichst so schnell erfolgen, dass sie auch bei einer sich in eine Vorschubrichtung bewegenden Glastafel 1 bzw. einem sich in eine Vorschubrichtung V bewegenden Glasband 4 erfolgen kann. Die Vorschubgeschwindigkeit der zu markierenden Glastafel 1 bzw. des zu markierendes Glasbands 4 beträgt dabei vorzugsweise 1 bis 80 m/min, bevorzugt 10 bis 20 m/min.

Die Markierung kann dabei mit einem ortsfesten oder sich bewegenden Laserkopf 9 durchgeführt werden. Vorzugsweise wird der Laserkopf 9 beim Markieren ebenfalls in Vorschubrichtung V, vorzugsweise mit derselben Geschwindigkeit wie die Glastafel 1 bzw. das Glasband 4 bewegt. Der Laserkopf 9 wird also mit der Glastafel 1 bzw. dem Glasband 4 mitgeführt. Er bewegt sich während des Markierungsvorgangs relativ gesehen zu der Glastafel 1 bzw. dem Glasband 4 nicht. Es wird lediglich der Laserstrahl 10 mittels der Scanoptik im Rahmen des Scanfeldes relativ zu der Glastafel 1 bzw. dem Glasband 4 bewegt.

Die Laseroptik 12 hat aber nicht nur einen Einfluss auf das Scanfeld, sondern auch einen direkten Einfluss auf das Ergebnis der Markierung. Der Grund hierfür ist, dass mittels der Laseroptik 12 die Größe des Laserfokus 13, die Schärfentiefe und damit die Energiedichte im Glas eingestellt werden können.

Vorzugsweise weist der mittels der Laseroptik 12 eingestellte Laserfokus 13 dabei einen Durchmesser von 10 bis 100 µm auf. Zudem ist der Laserfokus 13 zwischen den beiden Glasscheibenoberflächen 2a;b der zu markierenden Glasscheibe 2, um eine Innenmarkierung 7a zu erzeugen, die von den Glasscheibenoberflächen 2a;b beabstandet ist.

Bei der erzeugten Innenmarkierung 7a handelt es sich zudem vorzugsweise um einen maschinenlesbaren Code, vorzugsweise um einen Data-Matrix-Code (DCM) oder einen Barcode oder einen QR Code. Es kann sich aber auch um ein Logo, eine Produkt-ID oder eine Seriennummer handeln.

Die Innenmarkierung 7a weist zudem vorzugsweise folgende Abmessungen auf:

| | **Länge** | **Breite** |
|---|---|---|
| | 2 bis 20 mm | 2 bis 20 mm |
| vorzugsweise | 2 bis 5 mm | 2 bis 5 mm |

Vorzugsweise erstreckt sich die Innenmarkierung 7a zudem in Glasdickenrichtung gesehen über die gesamte Dicke der Glastafel 1, also von der einen Glastafeloberfläche 1a zur anderen Glastafeloberfläche 1b. Es handelt sich somit um eine 3-dimensionale Innenmarkierung 7a.

Je nach Anwendungszweck handelt es sich zudem vorzugsweise um eine prozessspezifische Innenmarkierung 7a, deren Inhalt direkt den erfolgten Bearbeitungsschritt abbildet, und/oder um eine endkundenspezifische Innenmarkierung 7a.

Wie bereits erläutert, weist die Innenmarkierung 7a typischerweise eine gelbe und/oder braune Farbe auf und ist erkennbar für das menschliche Auge. Ziel ist es, eine möglichst dunkle Einfärbung für einen möglichst guten Kontrast zu erreichen. Das Auslesen der Innenmarkierung 7a kann in an sich bekannter Weise im weißen Durchlicht erfolgen. Insbesondere erfolgt es maschinell mittels eines an sich bekannten und auf die Art der Innenmarkierung 7a abgestimmten Readers.

Wie ebenfalls bereits erläutert, ist die Erzeugung der Innenmarkierungen 7a auf der Basis von Farbzentren ein überwiegend reversibler Prozess, das heißt die Farbzentren bilden sich mit der Zeit mehr oder weniger stark zurück. Diese sogenannte Rekombination erfolgt spontan ohne äußeren Einfluss.

Im Rahmen der Erfindung wurde nun herausgefunden, dass die Geschwindigkeit der Rekombination gezielt erhöht werden kann. Das aktive Löschen der Innenmarkierung 7a ist bekanntermaßen mit einer Temperaturbehandlung möglich.

Erfindungsgemäß kann die Innenmarkierung 7a aber auch durch gezielte, lokale Laserbestrahlung gelöscht werden. Es wurde herausgefunden, dass dies insbesondere mit Laserstrahlung möglich ist, welche eine Wellenlänge aufweist, die im Komplementärfarbenbereich zu der Farbe der Innenmarkierung 7a liegt. Dadurch wird die Laserstrahlung von der Innenmarkierung 7a absorbiert und es kommt zur Löschung bzw. Schwächung des Kontrasts der Innenmarkierung 7a.

Die im vorliegenden Fall zur Löschung oder zumindest Schwächung der Innenmarkierung 7a verwendete Laserstrahlung weist somit eine Wellenlänge im violetten oder blauen oder grünen Spektralbereich bzw. im violetten bis grünen Spektralbereich auf. Vorzugsweise weist sie eine Wellenlänge von 300 bis 575 nm auf.

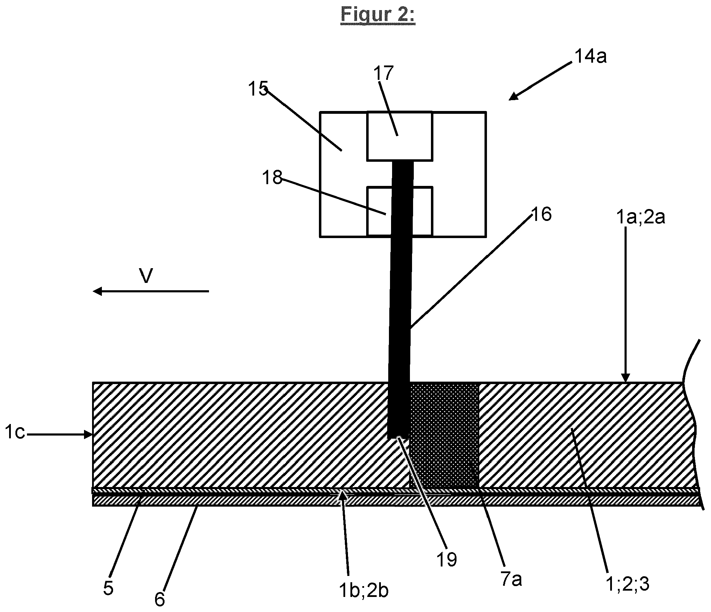

Für die Löschung der Innenmarkierung 7a wird vorzugsweise eine Entmarkierungseinrichtung 14a (Fig. 2) verwendet, die strukturell im Wesentlichen wie die Markierungseinrichtung 8a ausgebildet ist.

Die Entmarkierungseinrichtung 14a weist folglich ebenfalls einen Laserkopf bzw. eine Laserstrahlerzeugungseinrichtung 15 zur Erzeugung eines Laserstrahls 16 auf. Der Laserkopf 15 kann ortsfest sein oder verfahrbar sein, wozu entsprechende Antriebsmittel vorhanden sind.

Der Laserkopf 15 weist eine Laserstrahlungsquelle 17 und eine dazugehörige Laseroptik 18 auf. Mittels der Laseroptik 18 wird der Laserstrahl 16 fokussiert. Dabei kann der Laserstrahl 16 mittels der Laseroptik 18 zudem von einer Ausgangsposition, in der er vertikal bzw. senkrecht zur Glasoberfläche 1a;b ausgerichtet ist, verschwenkt bzw. ausgelenkt werden, so dass er ein Scanfeld abfahren kann, worauf weiter unten näher eingegangen wird.

Die Laserstrahlungsquelle 17 erzeugt dabei einen gepulsten oder kontinuierlichen Laserstrahl 16. Im Fall des gepulsten Laserstrahls 16, handelt es sich vorzugsweise um eine Nanosekunden-Laserstrahlungsquelle. Die Pulsdauer beträgt somit vorzugsweise mindestens 1 ns, bevorzugt einige bzw. mehrere ns. Die Pulsdauer kann aber auch länger sein. Die Pulsdauer ist somit geringer als bei der Laserstrahlungsquelle 11.

Vorzugsweise handelt es sich zudem bei der Laserstrahlungsquelle 17 um einen Festkörperlaser, bevorzugt um einen Faserlaser.

Vorzugsweise erzeugt die Laserstrahlungsquelle 17 einen Laserstrahl 16 mit hoher Energiedichte, um den Löschvorgang zu beschleunigen.

Die Bewegung des Laserstrahls 16 erfolgt dabei vorzugsweise durch Bewegung der Laserstrahlungsquelle 17 mitsamt der Laseroptik 18. Der Laserstrahl 16 wird z.B. in Form von nebeneinander angeordneten Linien über die zu löschende Innenmarkierung 7a geführt. Je größer dabei der Durchmesser des Laserfokus 19 ist, desto breiter sind die Linien und desto weniger Linien sind notwendig. Der Durchmesser des Laserfokus 19 kann zudem auch so groß sein, dass die Innenmarkierung 7a nur einmal oder gar nicht überfahren sondern nur beleuchtet werden muss, da die bestrahlte Fläche so groß wie die flächige Erstreckung der Innenmarkierung 7a ist.

Selbstverständlich kann die Bewegung des Laserstrahls 16 aber auch wie oben beschrieben mittels einer Scanoptik erfolgen.

Dabei soll auch die Entmarkierung möglichst so schnell erfolgen, dass sie auch bei einer sich in eine Vorschubrichtung bewegenden Glastafel 1 erfolgen kann. Dies kann analog wie oben bezüglich der Markierung beschrieben erfolgen. Die Entmarkierung kann aber selbstverständlich auch an einer unbewegten Glastafel 1 erfolgen. In diesem Fall ist auch der Laserkopf 15 vorzugsweise ortsfest.

Zudem ist der Laserfokus 19 gemäß einer ersten Ausführungsform analog wie bei der Markierung zwischen den beiden Glasscheibenoberflächen 2a;b der zu markierenden Glasscheibe 2 angeordnet. Der Laserfokus 19 kann aber auch auf der Glastafeloberfläche 1a;b bzw. der Glasscheibenoberfläche 2a;b liegen. Vorzugsweise beträgt der Laserfokusdurchmesser 50 µm bis 500 µm.

Vorteil des erfindungsgemäßen Verfahrens ist, dass sowohl die Markierung als auch die Löschung der Markierung schnell und kostengünstig und ohne erkennbare Veränderung der mechanischen Eigenschaften der Glastafeln 1 möglich ist. Das Glas wird makroskopisch nicht verändert. Die Glastafel 1 kann somit beliebig oft markiert und entmarkiert werden, ohne mechanische Schäden davon zu tragen. Das Verfahren ist somit reversibel. Insbesondere ist es auch vorteilhaft, dass die Glastafel 1 zur Löschung der Markierung lediglich lokal im Bereich der Innenmarkierung 7a mit Laserstrahlung beaufschlagt wird und nicht die gesamte Glastafel 1 erhitzt werden muss. Auch hierdurch wird die Glastafel 1 deutlich weniger belastet.

Diese Vorteile bietet auch das Verfahren gemäß einer zweiten Ausführungsform der Erfindung. Gemäß der zweiten Ausführungsform der Erfindung wird zunächst eine oberflächliche Flächenmarkierung 7b mittels Lasergravur auf den Glastafeln 1 erzeugt, wobei die oberflächliche Flächenmarkierung eine Eindringtiefe von < 10 µm aufweist, und diese anschließend mittels Laserpolitur wieder ententfernt, wobei für die Laserpolitur Laserstrahlung verwendet wird, die in einem Wellenlängenbereich liegt, welcher von der Glastafeloberfläche (1a) absorbiert wird. Bei der Flächenmarkierung 7b handelt es sich um eine 2-dimenionale Markierung.

Bei der Lasergravur wird bekanntermaßen die zu markierende Glastafel 1 an der zu markierenden Glastafeloberfläche 1a mittels Laserstrahlung abgetragen. Im Rahmen der Erfindung wurde nun herausgefunden, dass es möglich ist, auch eine eingravierte Flächenmarkierung 7b wieder zu entfernen, wenn es sich um eine Feinstgravur handelt. Die Feinstgravur wird dabei durch nicht-thermischen Materialabtrag aus der Glasoberfläche 1a mittels ultrakurz gepulster Laserstrahlung erzeugt. Insbesondere findet eine Wechselwirkung mit den Elektronen der Netzwerkwandler statt, was zum Materialabtrag führt.

Da es sich um eine Feinstgravur handelt, ist es überhaupt erst möglich, die eingravierte Flächenmarkierung 7b wieder zu entfernen. Denn die Tiefe der eingravierten Flächenmarkierung 7b ist so gering, dass sie mittels Laserpolitur entfernbar ist.

Die eingravierte Flächenmarkierung 7b weist dabei eine Eindringtiefe < 10 µm, bevorzugt < 5 µm, vorzugsweise < 2 µm auf.

Fig. 5 zeigt beispielhaft eine Markierungseinrichtung 8b zur Erzeugung der oberflächlichen Flächenmarkierung 7b. Die Markierungseinrichtung 8b ist analog zu der Markierungseinrichtung 8a zur Erzeugung Innenmarkierung 7a ausgebildet, weshalb auf die Ausführungen hierzu, auch bezüglich der Laserparameter, verwiesen wird.

Im Unterschied zur Erzeugung der Innenmarkierung 7a wird der Laserfokus 13 allerdings auf die zu markierende Glastafeloberfläche 1a fokussiert.

Des Weiteren ist die Energiedichte höher. Insbesondere ist sie so hoch, dass es zum Materialabtrag kommt. Wie hoch dabei die Energiedichte ist, ist wiederum unter anderem materialabhängig.

Wie bereits erläutert, wird die Flächenmarkierung 7b mittels Laserpolitur gelöscht.

Die Laserpolitur beruht auf der Absorption der Laserstrahlung in einer dünnen oberflächlichen Schicht der Glastafel 1, so dass oberflächennahe Temperaturen knapp unterhalb der Verdampfungstemperatur erreicht werden. Durch diese Aufheizung wird die Viskosität des Glases reduziert, so dass die Rauheit aufgrund der Oberflächenspannung ausfließt und geglättet wird. Es erfolgt somit eine Glättung durch Umschmelzen, nicht durch Materialabtrag. Dadurch erreicht man mit der Laserpolitur unter anderem eine vorteilhafte sehr geringe Mikrorauheit.

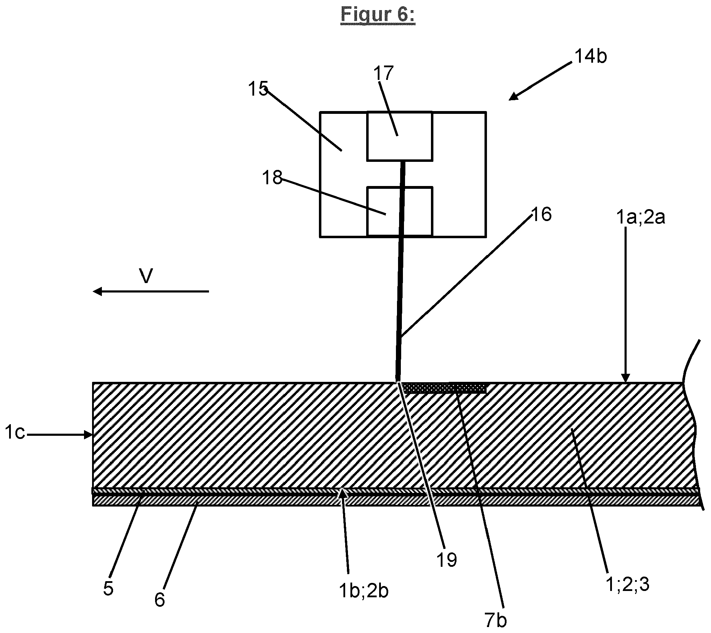

Fig. 6 zeigt beispielhaft eine Entmarkierungseinrichtung 14b zum Löschen der Flächenmarkierung 7b. Die Entmarkierungseinrichtung 14b ist im Wesentlichen analog zu der Markierungseinrichtung 14a zum Löschen der Innenmarkierung 7a ausgebildet, weshalb auf die Ausführungen hierzu verwiesen wird. Vorzugsweise beträgt z.B. der Laserfokusdurchmesser wie beim Löschen der Innenmarkierung ebenfalls 50 µm bis 500 µm, so dass ebenfalls großflächig gelöscht werden kann.

Im Unterschied zum Löschen der Innenmarkierung 7a wird der Laserfokus 19 allerdings immer auf die Glastafeloberfläche 1a fokussiert.

Zudem erzeugt die Laserstrahlungsquelle 17 Laserstrahlung, die in einem Wellenlängenbereich liegt, welcher von der Glastafeloberfläche 1a bzw. Glasscheibenoberfläche 2a absorbiert wird.

Vorzugsweise erzeugt sie einen Laserstrahl 16, dessen Wellenlänge bei < 330 nm oder bei ≥ 4,8 µm liegt.

Vorzugsweise handelt es sich bei der Laserstrahlungsquelle 17 um einen UV-Laser oder einen IR-Laser.

Vorzugsweise handelt es sich bei der Laserstrahlungsquelle 17 um einen CO₂-Laser oder einen CO-Laser. CO₂-Laser erzeugen in der Regel Laserstrahlung mit einer Wellenlänge von 10,6 µm. CO-Laser erzeugen in der Regel Laserstrahlung mit einer Wellenlänge von 4,8 bis 8,3 µm.

Die Laserleistung liegt vorzugsweise bei 1 bis einigen 100 W.

Vorteil des zweiten erfindungsgemäßen Verfahrens ist ebenfalls, dass sowohl die oberflächliche Markierung als auch die Löschung der Flächenmarkierung 7b schnell und kostengünstig und ohne erkennbare Veränderung der mechanischen Eigenschaften der Glastafeln 1 möglich ist. Wenn überhaupt ist der Materialabtrag beim Gravieren minimal und es werden ebenfalls keine thermischen Spannungen erzeugt. Das Feinstgravieren hat somit ebenfalls nahezu keinen Einfluss auf die Glasfestigkeit. Die Glastafel 1 kann somit beliebig oft markiert und entmarkiert werden, ohne mechanische Schäden davon zu tragen. Das Verfahren ist somit reversibel. Insbesondere ist es auch vorteilhaft, dass die Glastafel 1 zur Löschung der Flächenmarkierung 7b lediglich im Bereich der Glastafeloberfläche 1a lokal im Bereich der Flächenmarkierung 7b mit Laserstrahlung beaufschlagt wird und nicht die gesamte Glastafel 1 behandelt werden muss. Auch hierdurch wird die Glastafel 1 deutlich weniger belastet.

Zudem kann das Löschen der Innenmarkierung 7a bzw. der Flächenmarkierung 7b ohne Weiteres in den jeweiligen Herstellungs- oder Verarbeitungsprozess, integriert werden. Dies insbesondere auch bei kontinuierlichen Prozessen.

Beispielsweise wird beim Basisglashersteller eine Markierung 7a;b am Ende des Herstellungsprozesses aufgebracht und die markierten Basisglastafeln werden dann zum Glasverarbeiter geliefert. Dieser liest die Markierung 7a;b aus und entfernt sie vor dem nächsten Verarbeitungsschritt, z.B. dem Schneiden oder Beschichten mit einer Funktionsschicht, und bringt anschließend, wenn gewünscht, eine neue Markierung 7a;b auf. Dies kann beliebig oft erfolgen. Vorzugsweise ist auf dem Endprodukt dann keine Markierung 7a;b mehr vorhanden.

Allerdings kann die ursprüngliche Markierung 7a;b auch bereits beim Basisglashersteller gelöscht werden, wenn dieser die Basisglastafeln weiter verarbeitet, z.B. bereits aufteilt.

Wie bereits erläutert, können die hergestellten Einscheiben-Basisglastafeln z.B. auch noch beim Basisglashersteller mit einer Funktionsbeschichtung 5 versehen werden und/oder zu Verbund-Basisglastafeln verarbeitet werden, indem zwei oder mehr Einscheiben-Basisglastafeln miteinander verbunden werden. In diesem Fall kann die ursprüngliche Markierung 7a;b gelöscht werden und vor der Lieferung zum Glasverarbeiter eine neue Markierung 7a;b aufgebracht werden.

Dabei wurde im Rahmen der Erfindung heraus gefunden, dass es aber sogar auch möglich ist, dass die ursprüngliche Markierung 7a;b vor dem Aufbringen der Funktionsbeschichtung 5 und/oder der Herstellung von Verbund-Basisglastafeln nicht gelöscht werden muss, da sie nicht störend ist. Auch die Flächenmarkierung 7b stört überraschenderweise nicht, da sie eine so geringe Eindringtiefe aufweist, dass sie durch die Folie der Verbund-Basisglastafel ausgefüllt wird und auch eine Funktionsbeschichtung 5 auf die markierte Glastafeloberfläche 1a aufgebracht werden kann.

Zudem können beliebige Glastafeltypen mittels der erfindungsgemäßen Verfahren behandelt werden, beispielsweise nicht nur Standard-Floatglas, sondern auch eisenarmes Floatglas. Vorzugsweise werden allerdings Glastafeln 1 aus silikatischem Glas markiert.

Auch ist es unerheblich, ob bei der Markierung von der Zinn- oder der Luftseite her bestrahlt wird.

Die erfindungsgemäßen Verfahren gewährleisten zudem eine hohe Prozess-Sicherheit durch adaptive Einstellung des Kontrastes an die verwendete Optik/Beleuchtungskombination des jeweiligen Lesegerätes. Dadurch kann die Lesequote optimiert werden.

### Ausführungsbeispiel 1:

Es wurden mittels eines IR ps Lasers (1030 nm) in einer bereits geschnittenen, aus silikatischem Glas bestehenden, Floatglastafel Innenmarkierungen (DMC's) mit einer Kantenlänge von 5x5 mm und 3x3 mm erzeugt. Die Floatglastafel und der Laserkopf wurden dabei relativ mit einer Geschwindigkeit von 20 m/min zueinander bewegt. Der Laser wies folgende Eigenschaften auf:

| | |
|---|---|
| **Objektivbrennweite** | 254 mm |
| **Laserleistung** | 50 W |
| **Repetitionsrate** | 1000 kHz |
| **Scangeschwindigkeit** | 2000 mm/s |

Es wurden jeweils Innenmarkierungen mit ausreichendem Kontrast erzeugt.

Die Innenmarkierungen wurden anschließend mittels Laserstrahlung aktiv stark geschwächt bzw. ganz gelöscht. Der dazu verwendete ns-Laser (532 nm) wies folgende Eigenschaften auf:

| | |
|---|---|
| **Laserleistung** | 50 W |
| **Repetitionsrate** | 200 kHz |
| **Scangeschwindigkeit** | 2000 mm/s |

Die Markierungen mit mittlerem bzw. geringem Ausgangskontrast wurden dabei vollständig gelöscht. Nur die dunkelsten Markierungen sind nach der Behandlung noch sehr schwach zu erkennen gewesen.

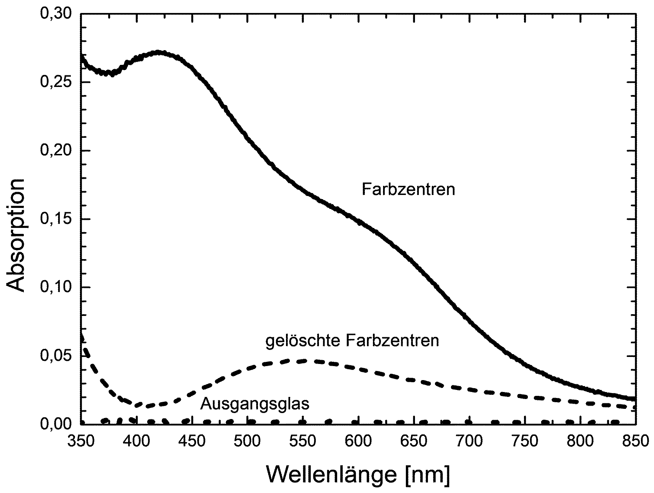

Wie schon beschrieben haben die durch Farbzentren hervorgerufenen Markierungen eine gelb-braune Färbung, wenn man diese im weißen Durchlicht betrachtet. Das Licht wird also im blauen Spektralbereich absorbiert. Dies zeigten auch durchgeführte spektroskopische Untersuchungen (siehe Figur 4). Figur 4 zeigt beispielhaft ein gemessenes Absorptionsspektrum der Farbzentren einer erfindungsgemäß erzeugten Innenmarkierung mit hohem Kontrast, sowie das Absorptionsspektrum der Innenmarkierung nach der weiteren Laserbehandlung und das Absorptionsspektrum des Ausgangsglases. Bei der Innenmarkierung ist zu Beginn eine deutliche Absorptionsbande bei 425 nm und eine etwas kleinere Bande bei etwa 550-600 nm, hier nur als Schulter ausgeprägt, zu erkennen. Nach der Laserbestrahlung ist zu erkennen, dass die dominierende Bande bei 425 nm nahezu vollständig verschwunden ist, während bei 550 nm eine Restabsorption bestehen blieb. Diese ist für die noch schwach erkennbaren gräulichen Färbungen verantwortlich. Bei Erhöhung der Bestrahlungsdauer ist aber auch diese Färbung löschbar.

### Ausführungsbeispiel 2:

Mit demselben Laser wie für die Innenmarkierung wurde eine Flächenmarkierung durch Feinstgravur erzeugt.

Die Flächenmarkierungen wurden anschließend mittels Laserpolitur gelöscht. Dazu wurde ein kontinuierlicher CO₂-Laser (10,6 µm) mit folgende Eigenschaften verwendet:

| | |
|---|---|
| **Laserleistung** | 10 W |
| **Scangeschwindigkeit** | 2000 mm/s |

## Patentansprüche

1. Verfahren zum Löschen einer laserinduzierten Markierung (7a) von Glastafeln (1), vorzugsweise von Basisglastafeln, bevorzugt von Floatglastafeln (3), wobei es sich bei der Markierung (7a) um eine Innenmarkierung (7a) auf Basis von Farbzentren handelt,
**dadurch gekennzeichnet, dass**
die Innenmarkierung (7a) mittels Laserstrahlung gelöscht wird, wobei zum Löschen der Innenmarkierung (7a) Laserstrahlung verwendet wird, die in einem Wellenlängenbereich liegt, welcher von den Farbzentren absorbiert wird.

2. Verfahren nach Anspruch 1,
**dadurch gekennzeichnet, dass**
zum Löschen der Innenmarkierung (7a) Laserstrahlung verwendet wird, die eine Wellenlänge aufweist, die im Komplementärfarbenbereich zu der Farbe der Innenmarkierung (7a) liegt.

3. Verfahren nach Anspruch 1 oder 2,
**dadurch gekennzeichnet, dass**
zum Löschen der Innenmarkierung (7a) Laserstrahlung verwendet wird, die
a) eine Wellenlänge im violetten oder blauen oder grünen Spektralbereich,
oder
b) eine Wellenlänge vom violetten bis grünen Spektralbereich, und/oder
c) eine Wellenlänge von 300 bis 575 nm,
aufweist.

4. Verfahren zum Löschen einer laserinduzierten Markierung (7b) von Glastafeln (1), vorzugsweise von Basisglastafeln, bevorzugt von Floatglastafeln (3),
wobei es sich bei der Markierung (7b) um eine oberflächliche, eingravierte Flächenmarkierung (7b) an einer Glastafeloberfläche (1a) der Glastafel (1) handelt, wobei die Flächenmarkierung (7b) eine Eindringtiefe < 10 µm, vorzugsweise < 2 µm, aufweist,
**dadurch gekennzeichnet, dass**
das Löschen der Flächenmarkierung (7b) mittels Laserpolitur erfolgt, wobei für die Laserpolitur Laserstrahlung verwendet wird, die in einem Wellenlängenbereich liegt, welcher von der Glastafeloberfläche (1a) absorbiert wird.

5. Verfahren nach Anspruch 4,
**dadurch gekennzeichnet, dass**
a) für die Laserpolitur Laserstrahlung mit einer Wellenlänge von < 330 nm oder ≥ 4,8 µm verwendet wird,
und/oder
b) für die Laserpolitur ein UV-Laser oder ein IR-Laser, bevorzugt ein CO₂-Laser oder ein CO-Laser, verwendet wird.

6. Verfahren nach einem der vorhergehenden Ansprüche,
**dadurch gekennzeichnet, dass**
a) zum Löschen der Markierung (7a;b) kontinuierliche Laserstrahlung oder Laserstrahlung mit einer Pulsdauer von ≥ 1 ns verwendet wird, und/oder
b) es sich bei der Markierung (7a;b) um eine maschinenlesbare Markierung (7a;b), vorzugsweise einen maschinenlesbaren Code, bevorzugt einen Data-Matrix-Code (DCM) oder einen Barcode oder einen QR Code, handelt.

7. Verfahren zur Markierung und zur Entmarkierung von Glastafeln (1), vorzugsweise von Basisglastafeln, bevorzugt von Floatglastafeln (3),
**gekennzeichnet durch folgende Verfahrensschritte:**
a) Laserinduziertes Erzeugen einer Markierung (7a) in Form einer Innenmarkierung (7a) in der Glastafel (1) durch Bildung von Farbzentren mittels ultrakurz gepulster Laserstrahlung,
b) Löschen der Innenmarkierung (7a) mittels Laserstrahlung gemäß einem der Ansprüche 1 bis 3 oder 6.

8. Verfahren zur Markierung und zur Entmarkierung von Glastafeln (1), vorzugsweise von Basisglastafeln, bevorzugt von Floatglastafeln (3),
**gekennzeichnet durch folgende Verfahrensschritte:**
a) Laserinduziertes Erzeugen einer Markierung (7b) in Form einer oberflächlichen Flächenmarkierung (7b) an einer Glastafeloberfläche (1a) der Glastafel (1) mit einer Eindringtiefe < 10 µm, vorzugsweise < 2 µm, durch Lasergravur mittels ultrakurz gepulster Laserstrahlung,
b) Löschen der Flächenmarkierung (7b) mittels Laserpolitur gemäß einem der Ansprüche 4 bis 6.

9. Verfahren nach Anspruch 7 oder 8,
**dadurch gekennzeichnet, dass**
die Markierung (7a;b) während des Herstellungsprozesses der Basisglastafel, vorzugsweise der Floatglastafel, in ein endloses Basisglasband, vorzugsweise ein Floatglasband (4), eingebracht wird, und die Basisglastafel, vorzugsweise die Floatglastafel (3), anschließend von dem endlosen Basisglasband, vorzugsweise Floatglasband (4), abgetrennt wird.

10. Verfahren nach einem der Ansprüche 7 bis 9,
**dadurch gekennzeichnet, dass**
a) beim Erzeugen der Markierung (7a;b) und/oder beim Löschen der Markierung (7a;b) ein die Laserstrahlung bereitstellender Laserkopf (9;15) relativ zur Glastafel (10) oder zu dem Basisglasband (4) ortsfest ist oder bewegt wird,
und/oder
b) sich beim Erzeugen der Markierung (7a;b) und/oder beim Löschen der Markierung (7a;b) die Glastafel (1) oder das Basisglasband (4), insbesondere in eine Vorschubrichtung (V), bewegt.

11. Verfahren nach einem der Ansprüche 7 bis 10,
**dadurch gekennzeichnet, dass**
a) zum Erzeugen der Markierung (7a;b) Laserstrahlung mit einer Wellenlänge von 300 nm bis 2 µm, bevorzugt von 533 nm bis 1200 nm, besonders bevorzugt von 533 nm bis 1 µm, verwendet wird,
und/oder
b) zum Erzeugen der Markierung (7a;b) Laserstrahlung mit einer Pulsdauer von 10⁻¹¹ bis 10⁻¹³ s verwendet wird,
und/oder
c) zum Erzeugen der Markierung (7a;b) ein Laserstrahl (10) mit einer Laserleistung von 20 bis 100 W verwendet wird,
und/oder
d) zum Erzeugen der Markierung (7a;b) ein fokussierter Laserstrahl (10) verwendet wird, wobei vorzugsweise der Laserstrahl (10) einen Durchmesser von 10 bis 100 µm aufweist.

12. Verfahren nach einem der Ansprüche 7 bis 11,
**dadurch gekennzeichnet, dass**
a) eine maschinenlesbare Markierung (7a;b), vorzugsweise ein maschinenlesbarer Code, bevorzugt ein Data-Matrix-Code (DCM) oder ein Barcode oder ein QR Code, erzeugt wird,
und/oder
b) Glastafeln (1), die an einer ihrer beiden Glasoberflächen (1a;b) eine Funktionsbeschichtung (5) mit mindestens einer metallhaltigen und/oder mindestens einer keramischen Funktionsschicht aufweisen, markiert und/oder entmarkiert werden, wobei bei der Laserbestrahlung die unbeschichtete Glasoberfläche (1b) be- oder durchstrahlt wird.

13. Vorrichtung zur Markierung und zur Entmarkierung von Glastafeln (1), vorzugsweise von Basisglastafeln, bevorzugt von Floatglastafeln (3), vorzugsweise durch Durchführung des Verfahrens gemäß einem der Ansprüche 7 oder 9 bis 12,
**gekennzeichnet durch:**
a) Eine Markierungseinrichtung (8a) mit einem Laserkopf (9) zur Bereitstellung von ultrakurz gepulster Laserstrahlung zum laserinduzierten Erzeugen einer Innenmarkierung (7a) in der Glastafel (1) durch Bildung von Farbzentren,
b) Eine Entmarkierungseinrichtung (14a) mit einem Laserkopf (15) zum Löschen der Innenmarkierung (7a) mittels Laserstrahlung, die in einem Wellenlängenbereich liegt, welcher von den Farbzentren absorbiert wird.

14. Vorrichtung nach Anspruch 13,
**gekennzeichnet durch:**
der Laserkopf (15) zum Löschen der Innenmarkierung (7a) mittels Laserstrahlung eingerichtet ist, die eine Wellenlänge aufweist, die im Komplementärfarbenbereich zu der Farbe der Innenmarkierung (7a) liegt.

15. Vorrichtung zur Markierung und zur Entmarkierung von Glastafeln (1), vorzugsweise von Basisglastafeln, bevorzugt von Floatglastafeln (3), vorzugsweise durch Durchführung des Verfahrens gemäß einem der Ansprüche 8 bis 12,
**gekennzeichnet durch:**
a) Eine Markierungseinrichtung (8b) mit einem Laserkopf (9) zur Bereitstellung von ultrakurz gepulster Laserstrahlung zum Erzeugen einer Flächenmarkierung (7b) mittels Lasergravur mit einer Eindringtiefe < 10 µm, vorzugsweise < 2 µm,
b) Eine Entmarkierungseinrichtung (14b) mit einem Laserkopf (15) zum Löschen der Flächenmarkierung (7b) mittels Laserpolitur mit Laserstrahlung die in einem Wellenlängenbereich liegt, welcher von der Glastafeloberfläche (1a) absorbiert wird.

16. Vorrichtung nach einem der Ansprüche 13 bis 15,
**dadurch gekennzeichnet, dass**
a) die Vorrichtung Mittel zur Bewegung der Glastafel (1) oder des Basisglasbands (4) beim Erzeugen der Markierung (7a;b) und/oder beim Löschen der Markierung (7a;b) in eine Vorschubrichtung (V) aufweist,
und/oder
b) der die Laserstrahlung bereitstellende Laserkopf (9;15) relativ zur Glastafel (10) oder zu dem Basisglasband (4) beim Erzeugen der Markierung (7a;b) und/oder beim Löschen der Markierung (7a;b) ortsfest ist oder die Vorrichtung Mittel zur Bewegung des die Laserstrahlung bereitstellenden Laserkopfes (9;15) relativ zur Glastafel (10) oder zu dem Basisglasband (4) beim Erzeugen der Markierung (7a;b) und/oder beim Löschen der Markierung (7a;b) aufweist.

17. Vorrichtung nach einem der Ansprüche 13 bis 16,
**dadurch gekennzeichnet, dass**
a) die Vorrichtung Mittel zur Bewegung des Laserkopfes (9;15) beim Erzeugen der Markierung (7a;b) und/oder beim Löschen der Markierung (7a;b) in Vorschubrichtung V, vorzugsweise mit derselben Geschwindigkeit wie die Glastafel (1) oder das Glasband (4), aufweist, und/oder
b) der Laserkopf (9) zum Erzeugen der Markierung (7a;b) und/oder der Laserkopf (15) zum Löschen der Markierung (7a;b) jeweils eine Laseroptik (12) mit einer Scanoptik zum Bewegen des Laserstrahls (10;16) in einem Scanfeld aufweist.

18. Verwendung einer Entmarkierungseinrichtung (14a) mit den Merkmalen der Entmarkierungseinrichtung (14a) nach einem der Ansprüche 13, 14, 16 oder 17 zum Löschen einer laserinduzierten Innenmarkierung (7a) auf Basis von Farbzentren von Glastafeln (1), vorzugsweise von Basisglastafeln, bevorzugt von Floatglastafeln (3), gemäß dem Verfahren gemäß einem der Ansprüche 1 bis 3 oder 6.

19. Verwendung einer Entmarkierungseinrichtung (14b) mit den Merkmalen der Entmarkierungseinrichtung (14b) nach einem der Ansprüche 15 bis 17 zum Löschen einer mittels Lasergravur erzeugten oberflächlichen Flächenmarkierung (7b) mit einer Eindringtiefe < 10 µm, vorzugsweise < 2 µm, von Glastafeln (1), vorzugsweise von Basisglastafeln, bevorzugt von Floatglastafeln (3), gemäß dem Verfahren gemäß einem der Ansprüche 4 bis 6.

## Claims

1. Method for erasing a laser-induced marking (7a) from glass sheets (1), preferably from basic glass sheets, preferably from float glass sheets (3), wherein the marking is an internal marking (7a) based on color centers,
**characterized in that**
the internal marking (7a) is erased by means of laser radiation, wherein for erasing the internal marking (7a), laser radiation is used which lies in a wavelength range which is absorbed by the color centers.

2. Method according to claim 1,
**characterized in that**
laser radiation having a wavelength which is in the complementary color range to the color of the internal marking (7a) is used to erase the internal marking (7a).

3. Method according to claim 1 or 2,
**characterized in that**
to erase the internal marking (7a) laser radiation is used which comprises
a) a wavelength in the violet or blue or green spectral range,
or
b) a wavelength from violet to green spectral range,
and/or
c) a wavelength of 300 to 575 nm.

4. Method for erasing a laser-induced marking (7b) from glass sheets (1), preferably from basic glass sheets, preferably from float glass sheets (3),
wherein the marking (7b) is a superficial, engraved surface marking (7b) on a glass sheet surface (1a) of the glass sheet (1), wherein the surface marking (7b) has a penetration depth < 10 µm, preferably < 2 µm,
**characterized in that**
the erasure of the surface marking (7b) is carried out by means of laser polishing, wherein for laser polishing, laser radiation is used which lies in a wavelength range which is absorbed by the glass sheet surface (1a).

5. Method according to claim 4,
**characterized in that**
a) for laser polishing, laser radiation with a wavelength of < 330 nm or ≥ 4.8 µm is used,
and/or
b) for laser polishing, a UV laser or an IR laser, preferably a CO₂ laser or a CO laser, is used.

6. The method according to any one of the preceding claims,
**characterized in that**
a) continuous laser radiation or laser radiation with a pulse duration of ≥ 1 ns is used to erase the marking (7a;b),
and/or
b) the marking (7a;b) is a machine-readable marking (7a;b), preferably a machine-readable code, especially a data matrix code (DCM) or a barcode or a QR code.

7. Method for marking and unmarking glass sheets (1), preferably basic glass sheets, especially float glass sheets (3),
**characterized by the following process steps:**
a) Laser-induced generation of a marking (7a) in the form of an internal marking (7a) in the glass sheet (1) by forming color centers using ultrashort pulsed laser radiation,
b) Erasing the internal marking (7a) by means of laser radiation according to any one of claims **Fehler! Verweisquelle konnte nicht gefunden werden.** to 3 or 6.

8. Method for marking and unmarking glass sheets (1), preferably basic glass sheets, especially float glass sheets (3),
**characterized by the following process steps:**
a) Laser-induced generation of a marking (7b) in the form of a superficial surface marking (7b) on a glass sheet surface (1a) of the glass sheet (1) having a penetration depth < 10 µm, preferably < 2 µm, by laser engraving using ultrashort pulsed laser radiation,
b) Erasing the surface marking (7b) by means of laser polishing according to any one of claims 4 to 6.

9. Method according to claim 7 or 8,
**characterized in that**
the marking (7a;b) is introduced into an endless basic glass ribbon, preferably a float glass ribbon (4), during the manufacturing process of the basic glass sheet, preferably the float glass sheet, and the basic glass sheet, preferably the float glass sheet (3), is subsequently separated from the endless basic glass ribbon, preferably float glass ribbon (4).

10. Method according to any one of claims 7 to 9,
**characterized in that**
a) when generating the marking (7a;b) and/or when erasing the marking (7a;b), a laser head (9;15) providing the laser radiation is stationary or moved relative to the glass sheet (10) or to the basic glass ribbon (4),
and/or
b) the glass sheet (1) or the base glass ribbon (4) moves, in particular in a feed direction (V), when the marking (7a;b) is generated and/or when the marking (7a;b) is erased.

11. Method according to any one of claims 7 to 10,
**characterized in that**
a) laser radiation with a wavelength of 300 nm to 2 µm, preferably of 533 nm to 1200 nm, particularly preferably of 533 nm to 1 µm, is used to generate the marking (7a;b),
and/or
b) laser radiation with a pulse duration of 10⁻¹¹ to 10⁻¹³ s is used to generate the marking (7a;b),
and/or
c) a laser beam (10) with a laser power of 20 to 100 W is used to generate the marking (7a;b),
and/or
d) a focused laser beam (10) is used to generate the marking (7a;b), wherein preferably the laser beam (10) has a diameter of 10 to 100 µm.

12. Method according to any one of claims 7 to 11,
**characterized in that**
a) a machine-readable marking (7a;b), preferably a machine-readable code, preferably a data matrix code (DCM) or a barcode or a QR code, is generated,
and/or
b) glass sheets (1) which have a functional coating (5) with at least one metal-containing and/or at least one ceramic functional layer on one of their two glass surfaces (1a;b) are marked and/or unmarked, wherein the uncoated glass surface (1b) is irradiated or penetrated during the laser irradiation.

13. Device for marking and unmarking glass sheets (1), preferably basic glass sheets, especially float glass sheets (3), preferably by carrying out the method according any to one of claims 7 or 9 to 12,
**characterized by:**
a) A marking device (8a) having a laser head (9) for providing ultrashort pulsed laser radiation for laser-induced generation of an internal marking (7a) in the glass sheet (1) by formation of color centers,
b) An unmarking device (14a) comprising a laser head (15) for erasing the internal marking (7a) by means of laser radiation which lies in a wavelength range which is absorbed by the color centers.

14. Device according to claim 13,
**characterized by:**
the laser head (15) is configured for erasing the internal marking (7a) by means of laser radiation which has a wavelength which lies in the complementary color range to the color of the internal marking (7a).

15. Device for marking and unmarking glass sheets (1), preferably basic glass sheets, especially float glass sheets (3), preferably by carrying out the process according to any one of claims 8 to 12,
**characterized by:**
a) A marking device (8b) with a laser head (9) for providing ultrashort pulsed laser radiation for producing a surface marking (7b) by means of laser engraving with a penetration depth < 10 µm, preferably < 2 µm,
b) An unmarking device (14b) with a laser head (15) for erasing the surface marking (7b) by means of laser polishing with laser radiation which lies in a wavelength range which is absorbed by the glass sheet surface (1a).

16. Device according to any one of claims 13 to 15,
**characterized in that**
a) the device has means for moving the glass sheet (1) or the basic glass ribbon (4) in a feed direction (V) when generating the marking (7a;b) and/or when erasing the marking (7a;b),
and/or
b) the laser head (9;15) providing the laser radiation is stationary relative to the glass sheet (10) or to the basic glass ribbon (4) during the generation of the marking (7a;b) and/or during the erasure of the marking (7a;b), or the device has means for moving the laser head (9;15) providing the laser radiation relative to the glass sheet (10) or to the basic glass ribbon (4) during the generation of the marking (7a;b) and/or during the erasure of the marking (7a;b).

17. Device according to any one of claims 13 to 16,
**characterized in that**
a) the device has means for moving the laser head (9;15) when generating the marking (7a;b) and/or when erasing the marking (7a;b) in the feed direction V, preferably at the same speed as the glass sheet (1) or the glass ribbon (4),
and/or
b) the laser head (9) for generating the marking (7a;b) and/or the laser head (15) for erasing the marking (7a;b) respectively has a laser optics (12) with a scan optics for moving the laser beam (10;16) in a scanning field.

18. Use of an unmarking device (14a) with the features of the unmarking device (14a) according to any one of claims 13, 14, 16 or 17 for erasing a laser-induced internal marking (7a) based on color centers from glass sheets (1), preferably from basic glass sheets, especially from float glass sheets (3), according to the method according to any one of claims 1 to 3 or 6.

19. Use of an unmarking device (14b) with the features of the unmarking device (14b) according to any one of claims 15 to 17 for erasing a laser-induced surface marking (7b) produced by means of laser engraving with a penetration depth < 10 µm, preferably < 2 µm, from glass sheets (1), preferably from basic glass sheets, especially from float glass sheets (3), according to the method according to any one of claims 4 to 6.

## Revendications

1. Procédé d'effacement d'un marquage (7a) induit par laser de feuilles de verre (1), de préférence de feuilles de verre de base, de préférence de feuilles de verre flotté (3), où le marquage (7a) est un marquage intérieur (7a) à base de centres colorés,
**caractérisé en ce que**
le marquage intérieur (7a) est effacé au moyen d'un rayonnement laser, où, pour effacer le marquage intérieur (7a), un rayonnement laser est utilisé , lequel se situe dans un domaine de longueurs d'onde qui est absorbée par les centres colorés.

2. Procédé selon la revendication 1,
**caractérisé en ce que**
pour effacer le marquage intérieur (7a), un rayonnement laser est utilisé qui comprend un longueur d'onde qui se situe dans le domaine de couleurs complémentaires de la couleur du marquage intérieure (7a).

3. Procédé selon la revendication 1 ou 2,
**caractérisé en ce que**
pour effacer le marquage intérieur (7a), un rayonnement laser est utilisé qui comprend
a) une longueur d'onde dans le domaine spectral du violet ou du bleu ou du vert,
ou
b) une longueur d'onde entre le domaine spectral violet et le domaine spectral vert,
et/ou
c) une longueur d'onde de 300 à 575 nm.

4. Procédé d'effacement d'un marquage (7b) induit par laser de feuilles de verre (1), de préférence de feuilles de verre de base, de préférence de feuilles de verre flotté (3),
où le marquage (7b) est un marquage de surface (7b) superficiel, gravé sur une surface de feuille de verre (1a) de la feuille de verre (1), où le marquage de surface (7b) comprend une profondeur de pénétration < 10 µm, de préférence < 2 µm,
**caractérisé en ce que**
l'effacement du marquage de surface (7b) est effectué au moyen d'un polissage au laser, le rayonnement laser utilisé pour le polissage au laser se situant dans un domaine de longueurs d'onde qui est absorbée par la surface de feuille de verre (1a).

5. Procédé selon la revendication 4,
**caractérisé en ce que**
a) pour le polissage au laser, un rayonnement laser est utilisé dont la longueur d'onde est < 330 nm ou ≥ 4,8 µm,
et/ou
b) pour le polissage au laser, un laser UV ou un laser IR, de préférence un laser CO₂ ou un laser CO, est utilisé.

6. Procédé selon l'une des revendications précédentes,
**caractérisé en ce que**
a) pour effacer le marquage (7a;b), un rayonnement laser continu ou un rayonnement laser avec une durée d'impulsion de ≥ 1 ns est utilisé, et/ou
b) le marquage (7a;b) est un marquage lisible par machine (7a;b), de préférence un code lisible par machine, de préférence un code Data Matrix (DCM) ou un code à barres ou un code QR.

7. Procédé de marquage et de dé-marquage de feuilles de verre (1), de préférence de feuilles de verre de base, de préférence de feuilles de verre flotté (3),
**caractérisé par les étapes de procédé suivantes:**
a) Génération induite par laser d'un marquage (7a) sous la forme d'un marquage intérieur (7a) dans la feuille de verre (1) par formation de centres colorés au moyen d'un rayonnement laser pulsé ultracourt,
b) Effacement du marquage intérieur (7a) au moyen d'un rayonnement laser selon l'une des revendications 1 à 3 ou 6.

8. Procédé de marquage et de dé-marquage de feuilles de verre (1), de préférence de feuilles de verre de base, de préférence de feuilles de verre flotté (3),
**caractérisé par les étapes de procédé** suivantes :
a) Génération induite par laser d'un marquage (7b) sous la forme d'un marquage de surface (7b) superficiel sur une surface de feuille de verre (1a) de la feuille de verre (1) avec une profondeur de pénétration < 10 µm, de préférence < 2 µm, par gravure au laser au moyen d'un rayonnement laser pulsé ultracourt,
b) Effacement du marquage de surface (7b) par polissage au laser selon l'une des revendications 4 à 6.

9. Procédé selon la revendication 7 ou 8,
**caractérisé en ce que**
le marquage (7a;b) est introduit dans un ruban de verre de base sans fin, de préférence dans un ruban de verre flotté (4), pendant le processus de fabrication de la feuille de verre de base, de préférence de la feuille de verre flotté, et la feuille de verre de base, de préférence la feuille de verre flotté (3), est ensuite séparé du ruban de verre de base sans fin, de préférence du ruban de verre flotté (4).

10. Procédé selon l'une des revendications 7 à 9,
**caractérisé en ce que**
a) lors de la génération du marquage (7a;b) et/ou de l'effacement du marquage (7a;b), une tête laser (9;15) fournissant le rayonnement laser est fixe ou déplacée par rapport à la feuille de verre (10) ou au ruban de verre de base (4),
et/ou
b) lors de la génération du marquage (7a;b) et/ou de l'effacement du marquage (7a;b), la feuille de verre (1) ou le ruban de verre de base (4) se déplace, en particulier dans une direction d'avance (V).

11. Procédé selon l'une des revendications 7 à 10,
**caractérisé en ce que**
a) pour générer le marquage (7a;b), un rayonnement laser d'une longueur d'onde de 300 nm à 2 µm, de préférence de 533 nm à 1200 nm, de manière particulièrement préférée de 533 nm à 1 µm, est utilisé,
et/ou
b) pour générer le marquage (7a;b), un rayonnement laser avec une durée d'impulsion de 10⁻¹¹ à 10⁻¹³ s est utilisé,
et/ou
c) pour produire le marquage (7a;b), un faisceau laser (10) d'une puissance laser de 20 à 100 W est utilisé,
et/ou
d) pour générer le marquage (7a;b), un faisceau laser (10) focalisé, est utilisé, où le faisceau laser (10) comprend de préférence un diamètre de 10 à 100 µm.

12. Procédé selon l'une des revendications 7 à 11,
**caractérisé en ce que**
a) un marquage lisible par machine (7a;b), de préférence un code lisible par machine, de préférence un code Data Matrix (DCM) ou un code à barres ou un code QR, est généré,
et/ou
b) des feuilles de verre (1), qui présentent sur l'une de leurs deux surfaces de verre (1a;b) un revêtement fonctionnel (5) avec au moins une couche fonctionnelle contenant du métal et/ou au moins une couche fonctionnelle céramique, sont marqués et/ou dé-marqués, où la surface de verre (1b) non revêtue est irradiée ou traversée lors de l'irradiation laser.

13. Dispositif de marquage et de dé-marquage de feuilles de verre (1), de préférence de feuilles de verre de base, de préférence de feuilles de verre flotté (3), de préférence par la réalisation du procédé selon l'une des revendications 7 ou 9 à 12,
**caractérisé par:**
a) Un dispositif de marquage (8a) avec une tête laser (9) pour la mise à disposition d'un rayonnement laser à impulsions ultracourtes pour la génération induite par laser d'un marquage intérieur (7a) dans la feuille de verre (1) par formation de centres colorés,
b) Un dispositif de dé-marquage (14a) avec une tête laser (15) pour effacer le marquage intérieur (7a) au moyen d'un rayonnement laser qui se situe dans un domaine de longueurs d'onde qui est absorbée par les centres colorés.

14. Dispositif selon la revendication 13,
**caractérisé par:**
la tête laser (15) est adaptée pour effacer le marquage intérieur (7a) au moyen d'un rayonnement laser qui comprend une longueur d'onde qui se situe dans le domaine de couleurs complémentaires à la couleur du marquage intérieur (7a).

15. Dispositif de marquage et de dé-marquage de feuilles de verre (1), de préférence de feuilles de verre de base, de préférence de feuilles de verre flotté (3), de préférence par réalisation du procédé selon l'une des revendications 8 à 12,
**caractérisé par:**
a) Un dispositif de marquage (8b) avec une tête laser (9) pour la mise à disposition d'un rayonnement laser à impulsions ultracourtes pour produire un marquage de surface (7b) par gravure au laser avec une profondeur de pénétration < 10 µm, de préférence< 2 µm,
b) Un dispositif de dé-marquage (14b) avec une tête laser (15) pour effacer le marquage de surface (7b) par polissage au laser avec un rayonnement laser qui se situe dans un domaine de longueurs d'onde qui est absorbée par la surface de plaque de verre (1a).

16. Dispositif selon l'une quelconque des revendications 13 à 15,
**caractérisé en ce que**
a) le dispositif comprend des moyens pour déplacer la feuille de verre (1) ou le ruban de verre de base (4) dans une direction d'avance (V) lors de la génération du marquage (7a;b) et/ou lors de l'effacement du marquage (7a;b),
et/ou
b) la tête laser (9;15) fournissant le rayonnement laser est fixe par rapport à la feuille de verre (10) ou au ruban de verre de base (4) lors de la génération du marquage (7a;b) et/ou de l'effacement du marquage (7a;b) ou le dispositif comprend des moyens pour déplacer la tête laser (9;15) fournissant le rayonnement laser par rapport à la feuille de verre (10) ou au ruban de verre de base (4) lors de la génération du marquage (7a;b) et/ou de l'effacement du marquage (7a;b).

17. Dispositif selon l'une des revendications 13 à 16,
**caractérisé en ce que**
a) le dispositif comprend des moyens pour le déplacement de la tête laser (9;15) lors de la génération du marquage (7a;b) et/ou de l'effacement du marquage (7a;b) dans la direction d'avance V, de préférence à la même vitesse que la feuille de verre (1) ou le ruban de verre (4),
et/ou
b) la tête laser (9) pour la génération du marquage (7a;b) et/ou la tête laser (15) pour l'effacement du marquage (7a;b) comprend respectivement une optique laser (12) avec une optique de scannage pour déplacer le faisceau laser (10;16) dans un champ de scannage.

18. Utilisation d'un dispositif de dé-marquage (14a) avec les caractéristiques du dispositif de dé-marquage (14a) selon l'une des revendications 13, 14, 16 ou 17 pour l'effacement d'un marquage intérieur (7a) induit par laser sur la base de centres colorés de feuilles de verre (1), de préférence de feuilles de verre de base, de préférence de feuilles de verre flotté (3), selon le procédé selon l'une des revendications 1 à 3 ou 6.

19. Utilisation d'un dispositif de dé-marquage (14b) avec les caractéristiques du dispositif de dé-marquage (14b) selon l'une des revendications15 à 17 pour effacer un marquage de surface (7b) produit par gravure au laser avec une profondeur de pénétration < 10 µm, de préférence < 2 µm, de feuilles de verre (1), de préférence de feuilles de verre de base, de préférence de feuilles de verre flotté (3), selon le procédé selon l'une des revendications 4 à 6.
